(19) Europäisches Patentamt
European Patent Office
Office européen des brevets

(11) Numéro de publication: 0 253 747 B1

(12) FASCICULE DE BREVET EUROPEEN

(45) Date de publication du fascicule du brevet: 12.09.90

(51) Int. Cl.[5]: C08L 83/07, C09D 183/04, C08J 3/03, D06M 15/643 // (C08L83/07, 83:05, C08K5:54)

(21) Numéro de dépôt: 87420168.4

(22) Date de dépôt: 19.06.87

(54) **Emulsions aqueuses, stables au stockage, de compositions organopolysiloxanes polyaddition pour l'enduction de matériaux souples.**

(30) Priorité: 24.06.86 FR 8609310

(43) Date de publication de la demande: 20.01.88 Bulletin 88/3

(45) Mention de la délivrance du brevet: 12.09.90 Bulletin 90/37

(84) Etats contractants désignés: AT BE CH DE ES FR GB GR IT LI LU NL SE

(56) Documents cités:
EP-A- 0 169 098
GB-A- 2 016 494
US-A- 3 957 717

(73) Titulaire: RHONE-POULENC CHIMIE, 25, quai Paul Doumer, F-92408 Courbevoie Cédex(FR)

(72) Inventeur: Fau, Alain, 18, Chemin du Grand Bois, F-69160 Tassin-La-Demi-Lune(FR)
Inventeur: Filippi, Gérard, 5, Chemin de la Bastéro, F-69350 La Mulatiere(FR)
Inventeur: Violland, Robert, 69, rue Bataille, F-69008 Lyon(FR)

(74) Mandataire: Seugnet, Jean Louis et al, RHONE-POULENC INTERSERVICES Service Brevets Chimie Centre de Recherches des Carrières B.P. 62, F-69192 Saint-Fons Cédex(FR)

EP 0 253 747 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne des émulsions aqueuses de compositions organopolysiloxane réticulables en couches minces par réaction d'hydrosilylation pour l'enduction de matériaux souples tels que des fibres textiles, du papier, du carton, des matières plastiques des feuilles métalliques et similaires, notamment pour rendre ces matériaux hydrofuges et/ou anti-adhérents à l'égard de matières collantes.

Les compositions du type ci-dessus sont connues depuis longtemps dans l'industrie des silicones et sont décrites en particulier dans de nombreux brevets et demandes de brevets.

Elles comportent des systèmes de réticulation du même type à savoir :

- au moins un organopolysiloxane contenant par molécule au moins deux groupes vinyle liés chacun à un atome de silicium dénommés par la suite groupe SiVi,
- au moins un organohydrogénopolysiloxane contenant par molécule au moins trois atomes d'hydrogène liés chacun à un atome de silicium dénommé par la suite groupe SiH,
- une quantité catalytiquement efficace d'un composé d'un métal du groupe du platine catalysant la réaction d'hydrosilylation.

Ainsi l'utilisation d'une émulsion aqueuse polyaddition pour l'anti-adhérence du papier est clairement décrite dans le brevet américain US-A-3 527 659 (colonne 1, lignes 25 à 28 ; colonne 2, lignes 37 à 46 et colonne 3, lignes 60 à 65).

Les émulsions aqueuses polyaddition en général, le rôle d'inhibiteur du catalyseur au platine joué par l'eau et l'obtention d'une composition durcie sur un support après évaporation de l'eau sont par ailleurs décrites à la colonne de gauche de la page 5 du brevet français FR-A-1 528 464 correspondant au brevet US-A-3 445 420.

Dans le passage précité on insiste sur le fait que cette mise en émulsion aqueuse ne peut se faire que dans des conditions où il ne se produit que peu d'hydrolyse des SiH.

Le brevet américain US-A-3 900 617 décrit une émulsion aqueuse comprenant comme diorganopolysiloxane vinylé un diorganopolysiloxane bloqué à ses deux extrémités par un groupement diméthylvinylsiloxyle. Ce brevet indique également, que pour la conservation de l'émulsion, après sa fabrication, il est souhaitable de préparer deux émulsions séparées, l'une, dénommée par la suite partie A, comportant le diorganopolysiloxane vinylé et le catalyseur d'hydrosilylation, l'autre, dénommée par la suite partie B, comportant le diorganopolysiloxane hydrogéné.

Les émulsifiants utilisables sont en particulier l'alcool polyvinylique pour la partie A et les éthyl-éthers au alkylphényl-éthers de polyalkylène glycols pour la partie B.

Le brevet français 2 338 316 enseigne également que l'émulsion doit être conservée en deux parties A et B distinctes mélangées extemporanément au moment de l'emploi et précise en outre que lors de la préparation de la partie A, le catalyseur au platine doit être incorporé dans le diorganopolysiloxane vinylé avant sa mise en émulsion.

La commercialisation sous la forme de ces deux parties A et B telles que décrites dans les deux brevets ci-dessus n'est pas sans présenter des inconvénients.

En premier lieu la quantité d'eau à transporter est importante ce qui augmente les coûts de transport. Par ailleurs et surtout, l'utilisateur, avant chaque utilisation, doit mélanger les quantités de parties A et B suivant des proportions bien déterminées pour aboutir à la fois à un rapport SiH/SiVi et à une quantité de catalyseur au platine désirés.

Il serait bien plus commode pour l'utilisateur de disposer d'une émulsion aqueuse conditionnée en deux parties, la première partie A comportant en émulsion aqueuse de préférence concentrée et extrêmement stable au stockage, le polysiloxane à SiVi et le polysiloxane à SiH et dans une deuxième partie B une émulsion catalysante aqueuse du catalyseur d'hydrosilylation. Pour préparer sa composition l'utilisateur n'aurait plus qu'à diluer éventuellement une certaine quantité de la partie A et à ajouter la quantité juste nécessaire d'émulsion catalysante de la partie B ce qui permettrait d'éliminer les risques possibles d'erreurs concernant le rapport SiH/SiVi et la quantité de catalyseur.

Un but de la présente invention est précisément de proposer une composition du type ci-dessus présentée en deux parties, la première partie A comportant en émulsion aqueuse très stable au stockage (stabilité au moins égale à 1 an) éventuellement concentrée, le polysiloxane à SiH et le polysiloxane à SiVi, la deuxième partie B comportant l'émulsion catalysante.

A la connaissance de la demanderesse une telle composition très stable au stockage comportant des parties A et B du type ci-dessus n'a jamais été décrite explicitement car une partie A de ce type est considérée jusqu'à présent comme non stable au stockage et perd de la réactivité. Par contre et c'est ce qui fait l'objet de la présente invention, ce problème de stabilité et de perte de réactivité au stockage a été résolu d'une part par le choix de polysiloxanes spécifiques de la partie A aussi bien au niveau du siloxane à SiVi que des polysiloxanes à SiH et, d'autre part, par le choix des agents émulsifiants.

Dans ce qui suit, sauf mentions contraires, les pourcentages et parties sont en poids.

La présente invention concerne en effet une composition organopolysiloxane caractérisée en ce qu'elle se présente avant emploi sous forme de deux émulsions aqueuses A et B,

l'émulsion aqueuse A comportant :

- ($V_1$) un diorganopolysiloxane sensiblement linéaire bloqué à chacune de ses extrémités de sa chaîne par un groupe vinyldiorganosiloxyle,

- ($V_2$) un copolymère statistique vinylorganodiorganopolysiloxane sensiblement linéaire bloqué à chacune des extrémités de sa chaîne par un groupe choisi parmi un groupe vinyldiorganosiloxyle et triorganosiloxyle comportant au moins trois groupes SiVi par molécule,
- ($H_1$) un copolymère statistique sensiblement linéaire diorganoorganohydrogénopolysiloxane comportant au moins trois groupes SiH par molécule et bloqué à chacune des extrémités de sa chaîne par un groupe choisi parmi un groupe triorganosiloxyle et diorganohydrogénosiloxyle,
- ($V_3$) un cyclotrisiloxane vinylé de formule :
$[R(CH_2 = CH)SiO]_3$
dans laquelle R est choisi parmi un radical alkyle en $C_1$-$C_4$, un radical phényle et un radical trifluoro-3,3,3 propyle, ajouté en quantité telle qu'entre 0,5 et 60 %, de préférence entre 1,5 et 20 % en nombre des groupes SiVi de la composition soient apportés par ($V_3$),
- (E) un émulsifiant qui est un mélange d'alcool polyvinylique ($E_1$) et d'au moins un éther ($E_2$) choisi parmi les alkyl-éthers de polyalkylèneglycol et les alkylphényl-éthers de polyalkylèneglycol,
- au moins 90 % en nombre de radicaux organiques des polysiloxanes ($V_1$), ($V_2$) et ($H_1$) sont des radicaux méthyles, les autres radicaux organiques étant choisis parmi les radicaux éthyle, propyle, phényle et trifluoro-3,3,3 propyle, les quantités de ($V_1$), ($V_2$), ($V_3$) et ($H_1$) étant choisies de telle sorte que le rapport en nombre des groupes SiH sur les groupes SiVi soit compris entre 0,5 et 5, de préférence entre 0,7 et 2,
- l'émulsion aqueuse B comportant une quantité catalytiquement efficace d'un composé du groupe du platine.

De préférence tous les radicaux organiques des polymères ($V_1$), ($V_2$), ($V_3$) et ($H_1$) autres que les groupes SiH, SiVi sont des radicaux méthyle.

Les polymères ($V_1$) sont des produits bien connus. Dans le cadre de la présente invention, il est préférable que ces polymères soient des fluides présentant une viscosité comprise entre 20 et 20 000, de préférence entre 50 et 500 mPa.s à 25 °C.

Les polymères ($V_1$) peuvent donc répondre à la formule :
$(CH_2 = CH) R_2Si - O - (R_2Si - O)_n—SiR_2(CH_2 = CH)$
les radicaux R identiques ou différents ayant la signification donnée ci-dessus.

Les copolymères ($V_2$) sont également bien connus. Leur viscosité n'est pas critique et on peut utiliser dans le cadre de la présente invention des fluides de viscosité de préférence supérieure à 20 mPa.s à 25 °C pouvant aller jusqu'à des viscosités pouvant atteindre 30 000 000 mPa.s à 25 °C, les copolymères ($V_2$) étant alors des gommes pour des viscosités supérieures à 1 000 000 mPa.s.

Le polysiloxane ($V_2$), comme le polysiloxane ($V_1$), peut être constitué d'un seul type de polysiloxane ou d'un mélange de plusieurs types de polysiloxane de viscosité différente.

Les polysiloxanes ($V_2$) peuvent donc répondre à la formule :
$R' R_2 Si - O -( R_2Si - O)_o—[(CH_2 = CH) RSi - O -]_p -SiR_2R'$

Les radicaux R identiques ou différents ayant la signification donnée ci-dessus, R' étant R ou un radical vinyle, o et p étant des nombres entiers dont la valeur est choisie en fonction des viscosités souhaitées.

Les copolymères ($H_1$) sont également des produits bien connus. Dans le cadre de la présente invention on préfère tout particulièrement les copolymères ayant une viscosité comprise entre 5 et 1 500, de préférence entre 20 et 150 mPa.s à 25 °C.

Les copolymères ($H_1$) peuvent donc répondre à la formule :
$YR_2Si - O —(R_2Si - O)_q—(YRSi - O -)_r —SiR_2Y$

Les radicaux R ayant la signification donnée ci-dessus, avec en outre la possibilité de représenter un groupe vinyle, les radicaux Y représentant un radical R ou un atome d'hydrogène, q et r étant des nombres entiers dont la valeur est choisie en fonction des viscosités souhaitées. De préférence q varie entre 1 et 100 et r entre 3 et 120.

Jusqu'à 50 % en poids des copolymères ($H_1$) peuvent être remplacés par des hydrogénopolysiloxanes ramifiés résineux de viscosité comprise entre 2 et 10 000 mPa.s à 25 °C et formés d'une combinaison de motifs choisis parmi ceux de formules $R_3SiO_{0,5}$, $R_2SiO_{1,5}$, $SiO_2$, $HR_2SiO_{0,5}$, HRSiO, $HSiO_{1,5}$, les radicaux R ayant la signification donnée pour ($H_1$) ci-dessus.

Les cyclotrisiloxanes ($V_3$) sont des produits bien connus dont les procédés de préparation sont en particulier décrits dans les brevets américains US-A-3 607 898, US-A-3 763 212, US-A-3 989 733 et la demande de brevet japonais publiée KOKAI 74/124 067 cités comme références.

On peut toutefois utiliser des mélanges de cyclotrisiloxane vinylés avec leurs homologues supérieurs cyclotétrasiloxane, cyclopentasiloxane, etc ..... sans les séparer au préalable à condition que la teneur minimum de groupe SiVi dans la composition provenant du trimère vinylé soit bien respectée.

L'alcool polyvinylique ($E_1$) est un produit solide granuleux qui peut encore présenter des groupes acétate, généralement le pourcentage d'hydrolyse est élevé, dépassant 85 %. On peut utiliser par exemple le RHODOVIOL ® 25/140 de RHONE-POULENC, ou l'ELVANOL ® 50-42 de DUPONT. On utilise généralement de 1 à 20 parties d'alcool polyvinylique pour 100 parties de polymères ($V_1$) à ($V_3$).

L'autre agent émulsifiant ($E_2$) non-ionique est de préférence utilisé à raison de 0,1 à 10 parties, de préférence de 0,15 à 5 parties pour 100 parties de copolymère ($H_1$).

Il est choisi parmi les alkyl-éthers et surtout les alkylphényléthers de polyalkylèneglycols. Le radical alkyle, linéaire ou ramifié, comporte de 1 à 15 atomes de carbone. Le nombre de motifs de formule $CH_2CH_2O$ dans l'enchaînement polyoxyéthylène a une grande influence sur les propriétés émulsifiantes. Il est de préférence supérieur à 5 et inférieur à 30. On peut utiliser un mélange formé de plusieurs agents émulsifiants ($E_2$) différant les uns les autres uniquement par le nombre de motifs $CH_2CH_2O$. Comme exemples d'émulsifiants ($E_2$) on peut utiliser le CEMULSOL ® O.N 10-20 de RHONE-POULENC ou le TERGIPOL ® NP-40 de UNION CARBIDE CORPORATION.

En ce qui concerne la partie B, l'émulsifiant ($E_1$) convient bien pour mettre en émulsion le catalyseur. Jusqu'à environ 50 % en poids du polymère ($V_1$) peut être incorporé et mis en émulsion dans la partie B.

On peut utiliser comme catalyseur (C) des composés d'un métal du groupe du platine, en particulier leurs sels et complexes notamment les complexes de platine-oléfine comme décrit dans les brevets US-A-3 159 601 et 3 159 662, les produits de réaction des dérivés du platine avec des alcools des aldéhydes et des éthers décrits dans le brevet US-A-3 220 972, les catalyseurs platine-vinylsiloxane décrits dans les brevets français FR-A-1 313 846 et son addition 88 676 et le brevet français FR-A-1 480 409, les complexes à ligand siloxane décrits dans les brevets US-A-3 715 334, 3 775 452 et 3 814 730 et les complexes à ligand organique décrits dans les brevets européens EP-A-57 459, EP-A-188 978 et EP-A-190 530, ainsi qu'un catalyseur au rhodium tel que décrit dans les brevets US-A-3 296 291 et 3 928 629.

Les métaux préférés du groupe du platine sont le platine et le rhodium ; le ruthénium bien que moins actif mais moins cher, est également utilisable.

La composition peut éventuellement contenir un inhibiteur du catalyseur rajouté en quantité telle qu'il inhibe l'action catalysante du platine à température ambiante, cette action inhibitrice cessant lors du traitement de réticulation. Des inhibiteurs convenables sont par exemple des dialkyldicarboxylates (brevet US-A-4 347 346), des diallylmaléates (brevet US-A-4 256 870) et des composés organiques acétyléniques (brevet US-A-3 445 420 et demande de brevet européen EP-A-146 422).

La quantité d'inhibiteur est généralement comprise entre 0,01 et 3,0 % de préférence entre 0,05 et 2,0 % par rapport au poids total de silicone.

Pour la partie A l'eau est généralement utilisée à raison de 20 à 300 parties de préférence de 30 à 150 parties pour 100 parties des polysiloxanes de la composition.

Pour la partie B, la teneur en eau peut être très supérieure surtout dans le cas où cette partie B est exempte de polysiloxanes ($V_1$).

La présente invention vise également un procédé préférentiel de préparation des parties A et B.

Selon ce procédé on prépare la partie A en préparant une première émulsion $S_1$ par passage dans un broyeur à colloïdes d'un mélange comportant les polysiloxanes ($V_1$), ($V_2$), ($V_3$), l'émulsifiant ($E_1$) et de l'eau.

Selon une variante préférentielle jusqu'à environ 50 % en poids du polymère ($V_1$) peut être incorporé dans la partie B et/ou jusqu'à environ 70 % en poids de ($E_2$) peut être ajouté à $S_1$, de préférence de 20 à 60 % de ($E_2$).

On prépare une deuxième émulsion $S_2$ par passage dans un broyeur à colloïdes d'un mélange comportant le polysiloxane ($H_1$) et ($E_2$) ou la partie restante de ($E_2$).

On mélange ensuite intimement les émulsions $S_1$ et $S_2$ qui forment alors la partie A qui de façon surprenante et inattendue est stable au stockage même sous une forme concentrée durant 1 an et plus.

Pour préparer la partie B on passe dans un broyeur à colloïdes, le composé du catalyseur avec de l'émulsifiant ($E_1$) et de l'eau et, de préférence, avec jusqu'à 50 % de ($V_1$).

Selon une variante on incorpore au préalable le composé catalytique dans la partie de ($V_1$) avant de rajouter l'eau conformément à l'enseignement du brevet français FR-A-2 338 316 précité.

On ajoute à la partie A, la partie B qui est, de préférence prédosée de façon à apporter généralement de 5 à 100 ppm de préférence de 10 à 60 ppm de catalyseur calculés en poids de métal par rapport au poids total des polysiloxanes engagés ($V_1$), ($V_2$), ($V_3$) et ($H_1$) de la composition, c'est-à-dire de tous les polysiloxanes à SiVi et à SiH de la composition.

On peut utiliser par exemple de 2 à 20 parties d'alcool polyvinylique ($E_1$) pour 100 parties de polysiloxane à SiVi et de 0,5 à 20 parties d'émulsifiant ($E_2$) pour 100 parties de polysiloxane ($H_1$).

Les compositions d'émulsions aqueuses catalysées sont stables pendant au moins 24 heures à la température ambiante ; de ce fait, elles peuvent séjourner dans les bacs des machines d'enduction pendant au moins une journée de travail.

Elles peuvent être appliquées à l'aide des dispositifs utilisés sur les machines industrielles d'enduction du papier tels que les systèmes à lames d'air, à barre égalisatrice ..... Une fois déposées sur les supports ou matériaux souples, les compositions d'émulsions aqueuses sont durcies en quelques secondes au cours du procédé de réticulation incluant une circulation dans des fours-tunnels chauffés vers 70-220 °C ; le temps de passage dans ces fours se situe généralement entre 3 et 20 secondes, il est fonction pour une longueur donnée des fours, de la vitesse à laquelle circulent les supports. Ce procédé de réticulation peut comporter en outre un passage sous UV ou sous faisceau d'électrons.

Il faut compter de 5 à 15 secondes vers 100-130 °C pour obtenir un revêtement correctement durci. Dans cette durée est comprise la fraction de temps nécessaire à l'évaporation de l'eau, cette fraction est souvent supérieure à 1/2.

La durée de réticulation des compositions selon l'invention est particulièrement court du fait essentiellement de la présence de ($V_3$) dans la composition.

Les quantités de compositions déposées sur les supports sont variables, elles dépendent du taux en extraits secs des compositions et des propriétés hydrofuges et anti-adhérentes recherchées ; il est souhaitable que les quantités déposées fournissent de 0,3 à 5,0 g d'extraits secs pour un $m^2$ de surface à traiter.

Les extraits secs sont formés des constituants de la composition sauf l'eau et/ou des produits de réaction de ces constituants.

Les revêtements ainsi obtenus confèrent aux supports sur lesquels ils sont appliqués de très bonnes propriétés anti-adhérentes et hydrofuges qui se conservent dans le temps. Ces revêtements résistent bien au frottement, de ce fait ils ne sont pas enlevés par abrasion lors du passage de leurs feuilles (ou bandes)-supports sur les cylindres de renvoi des machines d'enduction ou d'adhésivation, cylindres constitués de matériaux dont les surfaces sont plus ou moins rugueuses.

Par ailleurs, grâce essentiellement à la présence de ($V_3$) ces revêtements sont durs tout en restant suffisamment souples, ce qui facilite grandement la découpe automatique en machine des complexes adhésivés souples, en particulier des papiers.

Les compositions d'émulsions aqueuses conformes à l'invention peuvent être appliquées sur tous les matériaux ou substrats souples qui seront ultérieurement en contact par exemple avec des substances collantes et/ou libérant de l'humidité. Ces substrats peuvent comprendre les diverses variétés de papier (comme le papier Kraft dont le degré de raffinage peut être quelconque, le papier cristal, les papiers sulfurisés), les cartons, le parchemin végétal, les papiers enduits de polyéthylène ou de carboxyméthylcellulose, les feuilles en cellulose, les feuilles en matières plastiques telles que celles en polyéthylène, polypropylène, polytéréphthalate d'éthyle, les feuilles en métal, les tissus à base de fibres synthétiques, de verre ou d'amiante, les matériaux fibreux non-tissés qu'ils soient à base de fibres cellulosiques ou de fibres synthétiques ou d'un mélange de ces fibres.

La présente invention vise donc également un procédé d'enduction de ces substrats pour les rendre anti-andhérents et/ou hydrofuges ainsi que les substrats ainsi enduits.

Les matériaux rendus ainsi anti-adhérents sont utilisés comme intercalaires, supports séparateurs, papiers et pellicules pour transferts et emballages de matières collantes telles que la confiserie, la patisserie, les caoutchoucs crus, les brais et bitumes, les cires de de matières alimentaires libérant de l'humidité telles que le poisson, la viande, le fromage.

En particulier, les papiers enduits peuvent servir pour l'emballage d'aliments surgelés ; les aliments n'adhérent pas à leur emballage même après une durée de stockage d'un an ou plus à des températures pouvant s'abaisser jusqu'à -70 °C. En outre ces emballages peuvent subir sans se désagréger, les contraintes des techniques de cuisson rapide des aliments surgelés (température de l'ordre de 300 °C dans les fours à micro-ondes, cuisson à la vapeur) ; ces techniques sont mises en oeuvre par exemple dans les restaurants et les super-marchés.

- EXEMPLE 1 ET EXEMPLES COMPARATIFS 2 ET 3 :

a) on mélange intimement les constituants ci-après :

- 100 parties d'un composé $H_1$ ou $H_2$ défini comme suit :

* Composé $H_1$ : copolymère diméthylméthyl hydrogénopolysiloxane bloqué à chaque extrémité de sa chaîne par un groupement triméthylsiloxyle et comportant à la fois des motifs diméthylsiloxyle et des motifs méthylhydrogénosiloxyle répartis de façon statistique et alternée sur la chaîne silicone, de viscosité 60 mPa.s à 25 °C.

* Composé $H_2$ : polymère méthylhydrogénopolysiloxane bloqué à chaque extrémité de sa chaîne par un groupement triméthylsiloxyle sur la chaîne silicone, de viscosité 50 mPa.s à 25 °C.

- 8 parties d'un mélange pondéral 70/30 de deux nonylphénols polyoxyéthylénés, l'un ayant 10 motifs $OCH_2$-$CH_2$ et l'autre 20 motifs $OCH_2$-$CH_2$ commercialisé par la Société RHONE-POULENC sous la dénomination CEMULSOL ® O.N 10-20,

- 0,5 partie d'une solution aqueuse à 40 % d'acide acétique.

Le mélange est émulsifié par passage dans un broyeur à colloïdes. Le broyat est dilué par addition de 43 parties d'eau ;

l'émulsion obtenue renferme 60 % du composé organopolysiloxane hydrogéné $H_1$ ou $H_2$.

b) on mélange intimement les constituants ci-après :

- 231 parties d'eau,

- 20 parties d'un alcool polyvinylique ayant un indice de saponification de 140 et présentant en solution à 4 % dans l'eau une viscosité de 25 mPa.s à 25 °C, commercialisé par la Société RHONE-POULENC sous la dénomination RHODOVIOL ® 25/140.

Ensuite on ajoute à ce mélange :

- 1,5 partie du mélange pondéral 70/30 des deux nonylphénols polyoxyéthylénés utilisés sous a),

- 350 parties d'un copolymère statistique diméthyl méthylvinylpolysiloxane ayant des motifs méthylvinylsiloxyle dans la chaîne à terminaisons vinyldiméthylsiloxyle ayant environ une viscosité de 500 mPa.s à 25 °C et environ 3 % de groupement vinyle,

- 4 parties de diméthylpolysiloxane bloqué à chaque extrémité de la chaîne par un groupement diméthylvi-

nylsiloxyle de viscosité 5 mPa.s à 25 °C ayant environ 30 % en poids de radicaux vinyle,
- 10 parties de tétraméthyltétravinyl cyclotétrasiloxane ($D_4Vi$).

On ajoute à cette composition de 0 à 1 partie de triméthyltrivinylcyclotrisiloxane ($D_3Vi$) et l'ensemble est finement émulsifié par passage dans un broyeur à colloïdes. On dilue le broyat par addition de 292,5 parties d'eau et incorpore dans le broyat dilué, par simple agitation :
- 70 parties de l'émulsion préparée sous a),
- 20 parties de monopropylèneglycol.

La composition d'émulsion aqueuse ainsi formée est très stable au stockage ; en particulier, elle ne montre pas, après un abandon de 6 mois à 40 °C en récipient clos, de pertes significatives de groupes SiH.

On ajoute à cette émulsion 100 ppm de platine ($5.10^{-3}$ atome gramme de platine par Kg de composition) sous la forme d'un complexe du platine préparé à partir de l'acide chloroplatinique comme décrit ci-dessous.

On prépare un complexe platine-triène en mélangeant :
- 1 partie d'$H_2PtCl_6$, 6 $H_2O$,
- 5 parties d'isopropanol,
- 2 parties de bicarbonate de sodium $NaHCO_3$,
- 6 parties de β-myrcène.

On dissout tout d'abord l'acide chloroplatinique dans l'isopropanol, puis on ajoute $NaHCHO_3$ par petites fractions pour éviter la formation de mousse car il se dégage du gaz carbonique, puis on ajoute le β-myrcène.

Le mélange est traité sous reflux pendant 20 minutes à environ 80 °C tout en agitant. La coloration orange du départ passe au jaune. On refroidit le mélange réactionnel à température ambiante et on élimine l'isopropanol à 20 °C sous un vide de 1,5 KPa. On précipite les impuretés inorganiques dans l'hexane et on concentre, après filtration, la solution à 40 °C sous un vide de 0,1 à 1 KPa. On obtient une huile rouge orangée avec un rendement de 80 % par rapport au poids total de platine et de réactifs initiaux. On obtient un rapport Cl/Pt = 1,0. La concentration du complexe est ramenée à 3 % par dilution dans le toluène. C'est cette solution qui est utilisée par la suite.

Ce complexe est utilisé sous forme d'émulsion aqueuse renfermant 2 % d'alcool polyvinylique comme cité sous b).

On agite vigoureusement à température ambiante le mélange pendant quelques minutes.

Cette émulsion catalysée est alors diluée par addition d'une quantité suffisante d'eau pour former un bain de traitement ayant 10 % d'extraits secs.

Ce bain est déposé à raison de 8 g/m² sur un papier Kraft pesant 50 g/m², satiné en surface.

Le dépôt est effectué à l'aide d'une barre égalisatrice de Mayer, montée sur une machine industrielle d'enduction du papier.

Le film d'émulsion recouvrant le papier est simultanément séché et durci par passage pendant X secondes dans un four-tunnel chauffé, la température au niveau du papier étant de 110 °C, donnant ainsi le temps de réticulation.

On obtient ainsi un papier enduit possédant sur une face environ 0,8 g/m² d'un mince revêtement parfaitement réticulé.

On applique sur la face enduite du papier traité selon d), un ruban adhésif (sensible à la pression) dénommé TESA ® 4651 et maintient cette application pendant 20 heures sous une pression de 70 g/cm² ; la force nécessaire pour décoller ce ruban est ensuite mesurée à l'aide d'un dynamomètre, la vitesse de décollement étant de 30 cm/minutes. On trouve une force de décollement de 10 g pour une largeur du ruban de 1 cm. Si on utilise une vitesse de décollement ultra rapide de 300 m/mm on trouve une force de décollement de 40 g pour une largeur de ruban de 1 cm.

En vue d'apprécier la stabilité du bain catalysé, une nouvelle enduction est réalisée dans les mêmes conditions en utilisant le bain de traitement vieilli 24 heures. La stabilité du bain sera estimée bonne si le temps de réticulation de l'enduction à 110 °C et si la performance d'antiadhérence obtenue est identique à celle obtenue au temps 0 de la vie du bain (pot-life).

Dans le tableau ci-après l'action d'accélération de la réticulation due au triméthyltrivinylcyclotrisiloxane est mise en évidence sans qu'il y ait une action néfaste sur la stabilité du bain (24 heures).

La stabilité de l'émulsion, non catalysée, est contrôlée après stockage de l'émulsion à 40 °C. La vitesse de réticulation et la stabilité du bain doivent rester constantes.

Les résultats sont rassemblés dans le tableau ci-après.

Du tableau il ressort que seul l'exemple 1 conforme à l'invention présente à la fois un temps de réticulation, une stabilité de bain catalysée et une stabilité de l'émulsion non catalysée très satisfaisants. La composition de l'exemple comparatif 2 sans $D_3Vi$ présente un temps de réticulation beaucoup trop long, la composition de l'exemple comparatif 3 avec $H_2$ et avec $D_3Vi$ présente une stabilité de l'émulsion non catalysée insuffisante.

**TABLEAU I**

| Ex. | Nature de de l'hydrogéno polysiloxane | % en nombre de Vi provenant de $D_3Vi$ | ‰ $D_3Vi$ | ‰ $D_4Vi$ | Temps de réticulation en sec. à 110.°C | Stabilité du bain catalysé (heures) | Stabilité de l'émulsion non catalysée |
|---|---|---|---|---|---|---|---|
| 1 | $H_1$ | 2 | 1 | 10 | 15 | $> 24$ | $\geqslant$ 1 an |
| 2 | $H_1$ | 0 | 0 | 10 | $\geqslant 60$ | $> 24$ | $\geqslant$ 1 an |
| 3 | $H_2$ | 2 | 1 | 10 | 15 | $> 24$ | $<$ 4 mois |

**Revendications**

1. - Composition organopolysiloxane caractérisée en ce qu'elle se présente avant emploi sous forme de deux émulsions aqueuses A et B,
l'émulsion aqueuse A comportant :
- ($V_1$) un diorganopolysiloxane sensiblement linéaire bloqué à chacune de ses extrémités de sa chaîne par un groupe vinyldiorganosiloxy,
- ($V_2$) un copolymère statistique vinylorganodiorganopolysiloxane sensiblement linéaire bloqué à chacune des extrémités de sa chaîne par un groupe choisi parmi un groupe vinyldiorganosiloxyle et triorganosiloxyle comportant au moins trois groupes SiVi par molécule,
- ($H_1$) un copolymère statistique sensiblement linéaire diorganoorganohydrogénopolysiloxane comportant au moins trois groupes SiH par molécule et bloqué à chacune des extrémités de sa chaîne par un groupe choisi parmi un groupe triorganosiloxyle et diorganohydrogénosiloxyle,
- ($V_3$) un cyclotrisiloxane vinylé de formule :
$[R(CH_2 = CH)SiO]_3$
dans laquelle R est choisi parmi un radical alkyle en $C_1$-$C_4$, un radical phényle et un radical trifluoro-3,3,3 propyle, ajouté en quantité telle qu'entre 0,5 et 60 %, de préférence entre 1,5 et 20 % en nombre des groupes SiVi de la composition soient apportés par ($V_3$),
- (E) un émulsifiant qui est un mélange d'alcool polyvinylique ($E_1$) et d'au moins un éther ($E_2$) choisi parmi les alkyl-éthers de polyalkylèneglycol et les alkylphényl-éthers de polyalkylèneglycol,
- au moins 90 % en nombre de radicaux organiques des polysiloxanes ($V_1$), ($V_2$) et ($H_1$) sont des radicaux méthyles, les autres radicaux organiques étant choisis parmi les radicaux éthyle, propyle, phényle et trifluoro-3,3,3 propyle, les quantités de ($V_1$), ($V_2$), ($V_3$) et ($H_1$) étant choisies de telle sorte que le rapport en nombre des groupes SiH sur les groupes SiVi soit compris entre 0,5 et 5, de préférence entre 0,7 et 2,
- l'émulsion aqueuse B comportant une quantité catalytiquement efficace d'un composé du groupe du platine.

2. - Composition selon la revendication 1, caractérisée en ce que tous les radicaux organiques des polymères ($V_1$), ($V_2$), ($V_3$) et ($H_1$) autres que les groupes SiH, SiVi sont des radicaux méthyle.

3. - Composition selon les revendications 1 et 2, caractérisée en ce que jusqu'à 50 % de ($H_1$) sont remplacés par des hydrogénopolysiloxanes ramifiés résineux de viscosité comprise entre 2 et 10 000 mPa.s à 25 °C et formés d'une combinaison de motifs choisis parmi ceux de formules $R_3SiO_{0,5}$, $R_2SiO$, $RSiO_{1,5}$, $SiO_2$, $HR_2SiO_{0,5}$, HRSiO, $HSiO_{1,5}$, les radicaux R ayant la signification donnée pour ($H_1$).

4. - Composition selon l'une quelconque des revendications précédentes, caractérisée en ce que jusqu'à environ 50 % en poids du polymère ($V_1$) est mis en émulsion dans la partie B.

5. - Procédé de préparation de la partie A telle que définie à l'une quelconque des revendications précédentes, caractérisé en ce qu'on prépare une première émulsion $S_1$ par passage dans un broyeur à colloïdes d'un mélange comportant les polysiloxanes ($V_1$), ($V_2$), ($V_3$), l'émulsifiant ($E_1$) et de l'eau, en ce qu'on prépare une deuxième émulsion $S_2$ par passage dans un broyeur à colloïdes d'un mélange comportant le polysiloxane ($H_1$) et ($E_2$) et en ce qu'on mélange intimement les émulsions ($S_1$) et ($S_2$).

6. - Procédé selon la revendication 5, caractérisé en ce que jusqu'à environ 70 % en poids de ($E_2$) est ajouté à $S_1$.

7. - Procédé permettant de rendre hydrofuge et/ou anti-adhérante une surface d'un matériau souple à des surfaces auxquelles elles adhèrent normalement, caractérisé en ce qu'il consiste à appliquer une quantité d'une composition telle que définie à l'une quelconque des revendications 1 à 4, en vue de déposer de 0,3 à 5,0 g d'extraits secs pour un $m^2$ de surface à revêtir.

8. - Matériau enduit par un procédé conforme à la revendication 7.

**Patentansprüche**

1. Organopolysiloxanzusammensetzung, dadurch gekennzeichnet, daß sie vor ihrer Anwendung in Form von zwei wäßrigen Emulsionen A und B vorliegt, wobei die wäßrige Emulsion A enthält:
– ($V_1$) ein im wesentlichen lineares Diorganopolysiloxan, das an jedem seiner Kettenenden durch eine Vinyldiorganosiloxygruppe blockiert ist,
– ($V_2$) ein im wesentlichen lineares statistisches Vinylorganodiorgano-polysiloxancopolymeres, das an jedem seiner Kettenenden durch eine Gruppe, ausgewählt unter einer Vinyldiorganosiloxy- und Triorganosiloxygruppe, die zumindest drei SiVi-Gruppen je Molekül enhält, blockiert ist,
– ($H_1$) ein im wesentlichen lineares statistisches Diorgano-organohydrogeno-polysiloxancopolymeres mit zumindest drei SiH-Gruppen je Molekül, das an jedem seiner Kettenenden durch eine Gruppe, ausgewählt unter einer Triorganosiloxy- und Diorganohydrogenosiloxygruppe, blockiert ist,
– ($V_3$) ein vinyliertes Cyclotrisiloxan der Formel
$[R(CH_2 = CH)SiO]_3$
worin R ausgewählt ist unter einem $C_1$–$C_4$-Alkylrest, einem Phenylrest und einem 3,3,3-Trifluorpropylrest, das in einer derartigen Menge zugesetzt ist, daß zwischen 0,5 und 60%, vorzugsweise zwischen 1,5 und 20% der Anzahl der SiVi-Gruppen der Zusammensetzung durch ($V_3$) eingebracht sind,
– (E) ein Emulgiermittel, bei dem es sich um eine Mischung eines Polyvinylalkohols ($E_1$) und zumindest eines Ethers ($E_2$), ausgewählt unter den Polyalkylenglykol-alkylethern und den Polyalkylenglykol-alkylphenylethern, handelt,
– zumindest 90% der Anzahl der organischen Reste der Polysiloxane ($V_1$), ($V_2$) und ($H_1$) sind Methylreste, wobei die anderen organischen Reste unter den Ethyl-, Propyl-, Vinyl- und 3,3,3-Trifluorpropylresten ausgewählt sind, wobei die Mengen an ($V_1$), ($V_2$), ($V_3$) und ($H_1$) derart gewählt sind, dap das Verhältnis der Anzahl der SiH-Gruppen zu den SiVi-Gruppen zwischen 0,5 und 5, vorzugsweise zwischen 0,7 und 2 liegt,
– wobei die wäßrige Emulsion B eine katalytisch wirksame Menge einer Verbindung der Platingruppe enthält.

2. Zusammensetzung gemäß Anspruch 1, dadurch gekennzeichnet, daß die organischen Reste der Polymeren ($V_1$), ($V_2$), ($V_3$) und ($H_1$) außer der SiH- und SiVi-Gruppen Methlygruppen sind.

3. Zusammensetzung gemäß den Ansprüchen 1 und 2, dadurch gekennzeichnet, daß bis zu 50% von ($H_1$) durch harzartige, verzweigte Hydrogenopolysiloxane mit einer Viskosität zwischen 2 und 10 000 mPa.s bei 25°C, gebildet aus einer Kombination der Gruppen, ausgewählt unter denjenigen der Formeln $R_3SiO_{0,5}$, $R_2SiO$, $RSiO_{1,5}$, $SiO_2$, $HR_2SiO_{0,5}$, $HRSiO$, $HSiO_{1,5}$, wobei die Reste R die für ($H_1$) angegebene Bedeutung besitzen, ersetzt sind.

4. Zusammensetzung gemäß einem der vorhergehenden Ansprüche, dadurch gekennzeichnet, daß bis zu etwa 50 Gew.% des Polymeren ($V_1$) in den Teil B in Emulsion gebracht ist.

5. Verfahren zur Herstellung des Teils A gemäß einem der vorhergehenden Ansprüche, dadurch gekennzeichnet, daß man eine erste Emulsion $S_1$ herstellt, indem man ein Gemisch, das die Polysiloxane ($V_1$), ($V_2$), ($V_3$), das Emulgiermittel ($E_1$) und Wasser enthält, eine Kolloidmühle passieren läßt und eine zweite Emulsion $S_2$ herstellt, indem man ein Gemisch, das das Polysiloxan ($H_1$) und ($E_2$) enthält, eine Kolloidmühle passieren läßt, und die Emulsionen $S_1$ und $S_2$ innig mischt.

6. Verfahren gemäß Anspruch 5, dadurch gekennzeichnet, daß bis zu 70 Gew.% ($E_2$) zu $S_1$ zugegeben werden.

7. Verfahren, um eine Oberfläche eines flexiblen Materials mit Oberflächen, an denen sie normalerweise haften, wassersabweisend und/oder antiadhäsiv zu machen, dadurch gekennzeichnet, daß man eine Menge einer Zusammensetzung gemäß einem der Ansprüche 1 bis 4 derart aufbringt, daß 0,3 bis 5,0 g Trockenextrakt je m² zu überziehender Oberfläche abgeschieden werden.

8. Gemäß einem Verfahren nach Anspruch 7 überzogenes Material.

## Claims

1. Organopolysiloxane composition characterized in that before use it is in the form of two aqueous emulsions A and B, the aqueous emulsion A comprising:
– ($V_1$) a substantially linear diorganopolysiloxane blocked by a vinyldiorganosiloxy group at each of its chain ends,
– ($V_2$) a substantially linear, random vinylorganodiorganopolysiloxane copolymer blocked at each of its chain ends by a group chosen from a vinyldiorganosiloxyl group and triorganosiloxyl group containing at least three SiVi groups per molecule,
– ($H_1$) a substantially linear, random diorganoorganohydropolysiloxane copolymer comprising at least three SiH groups per molecule and blocked at each of its chain ends by a group chosen from a triorganosiloxyl group and diorganohydrosiloxyl group,
– ($V_3$) a vinylated cyclotrisiloxane of formula:
$[R(CH_2 = CH)SiO]_3$
in which R is chosen from a $C_1$–$C_4$ alkyl radical, a phenyl radical and a 3,3,3-trifluoropropyl radical, added in such quantity that between 0.5 and 60%, preferably between 1.5 and 20%, of the number of the SiVi groups of the composition are contributed by ($V_3$),
– (E) an emulsifier which is a mixture of polyvinyl alcohol ($E_1$) and of at least one ether ($E_2$) chosen from polyalkylene glycol alkyl ethers and polyalkylene glycol alylphenyl ethers,
– at least 90% of the number of organic radicals of the polysiloxanes ($V_1$), ($V_2$) and ($H_1$) are methyl radicals, the other organic radicals being chosen from ethyl, propyl, phenyl and 3,3,3-trifluoropropyl radicals, the quantities of ($V_1$), ($V_2$), ($V_3$) and ($H_1$) being chosen so that the numerical ratio of the SiH groups to the Sivi groups is between 0.5 and 5, preferably between 0.7 and 2,
– the aqueous emulsion B comprising a catalytically effective quantity of a compound of the platinum group.

2. Composition according to Claim 1, characterized in that all the organic radicals of the polymers ($V_1$), ($V_2$), ($V_3$) and ($H_1$) other than the SiH and SiVi groups are methyl radicals.

3. Composition according to Claims 1 and 2, characterizedin that up to 50% of ($H_1$) are replaced by resinous branched hydropolysiloxanes with a viscosity of between 2 and 10,000 mPa s at 25°C and are made up of a combination of units chosen from those of formulae $R_3SiO_{0.5}$, $R_2SiO$, $RSiO_{1.5}$, $SiO_2$, $HR_2SiO_{0.5}$,

HRSiO, $HSiO_{1.5}$, the radicals R having the meaning given for ($H_1$).

4. Composition acrording to any one of the preceding claims, characterized in that up to approximately 50% by weight of the polymer ($V_1$) is emulsified in part B.

5. Process for the preparation of part A such as defined in any one of the preceding claims, characterized in that a first emulsion $S_1$ is prepared by running through a colloid mill a mixture comprising the polysiloxanes ($V_1$), ($V_2$), ($V_3$), the emulsifier ($E_1$) and water, in that a second emulsion $S_2$ is prepared by running through a colloid mill a mixture comprising the polysiloxane ($H_1$) and ($E_2$) and in that the emulsions ($S_1$) and ($S_2$) are thoroughly mixed.

6. Process according to Claim 5, characterized in that up to approximately 70% by weight of ($E_2$) is added to $S_1$.

7. Process enabling a surface of a flexible material to be made water-repellent and/or antiadhesive to surfaces to which they normally adhere, characterized in that it consists in applying a quantity of a composition such as defined in any one of Claims 1 to 4, with a view to depositing from 0.3 to 5.0 g of dry solids per one $m^2$ of surface to be coated.

8. Material roated by a process in accordance with Claim 7.